# EUROPEAN PATENT APPLICATION

(11) **EP 1 440 755 A1**
(43) Date of publication of application: **28.07.2004**
(21) Application number: 03015356.3
(22) Date of filing: 08.07.2003
(51) Int. Cl.: B23D 15/14, B21J 7/24

(54) **Device for cutting metallic materials in the form of bars or thick plates**

(30) Priority: 17.01.2003 IT MI20030057
(71) Applicant: FICEP S.P.A., 21045 Gazzada Schianno, (Varese) (IT)
(72) Inventor: Martini, Alfredo, 25050 Passirano, (Brescia) (IT)
(74) Representative: Forattini, Amelia

(57) **Abstract**

A device for cutting metallic materials in the form of bars or thick plates, which includes: an impact mass (10), which is capable of accumulating enough kinetic energy to perform cutting work; a pressurized gas, in order to supply the kinetic energy to the impact mass by way of a first cylinder-and-piston unit (14, 15); a liquid for braking an advancement of the impact mass; a valve (27) for releasing the liquid and allowing a rapid advancement of the impact mass; a first cartridge (32), which can slide within a seat (33) of a frame (30) of the valve, under a thrust of the liquid; and an inlet (31) for introducing the liquid into the valve having a direction that is coaxial to the direction of motion of the first cartridge.

## Description

The present invention relates to a device for cutting metallic materials in the form of bars or thick plates. More particularly, the machines that perform these operations are billet shearing machines, punches for thick plates and blanking presses. The metallic materials machined are mostly ferrous materials, but are also nonferrous materials such as titanium, aluminum and bronze.

Known shearing machines are meant to obtain from bars of metallic material, having a square or circular cross-section, segments of the exact size required for the subsequent machining operations. In other words, they are automatic machines that are placed at the beginning of production lines and are fed with the parts obtained from the long bars that arrive from steelworks: the cuts must be as clean as possible, without burr, and the productivity must be as high as possible.

For shearing, the bar, by advancing horizontally, is inserted in a bushing, where a tool supported by a ram that has a rapid vertical motion performs blanking: this process requires the ability to apply impulsive actions of several tons, since it is necessary to cut cleanly bars of metallic material (particularly steel) whose dimensions can reach approximately 160 mm.

These actions are currently obtained, in most industrial applications, by way of mechanical systems. Heavy and bulky flywheels (to which motion is supplied by means of long belts) are required which must be able to accumulate in their rotation the kinetic energy to be released in the brief active arc during shearing, acting thereat with a linear motion that is obtained from the circular motion of the flywheel by conventional systems based on slot links and levers, or linkages and sliders. In any case, one has to deal with mechanical parts in relative motion (i.e., rotary and side-fit couplings) under the action of great forces, and this requires considerable sizes, leading to massive parts and structures that cannot be brought to great speeds indeed due to the excess of inertial feedbacks that this would cause: hence the limitation of the maximum cutting speed, which cannot be raised significantly beyond the 200-300 mm/s that can be obtained currently.

Hydraulic systems are also known. This technique is based on obtaining the enormous shearing forces by way of the action of hydraulic cylinders fed with oil at high pressure: this reduces masses and dimensions considerably, but the cutting movements - produced by outgoing and return flows of the oil in the components of the hydraulic circuit - as not as fast as the ones that can be obtained with mechanical systems, leading to maximum cutting speeds that usually do not exceed 150 mm/s. In practice, therefore, hydraulic systems are much slower than mechanical ones, reducing productivity. For this reason, hydraulic systems have an extremely limited industrial diffusion compared to the mechanical systems described above.

In any case, with the methods described above, and even with the fastest mechanical ones, the current productivity of shearing machines does not exceed 60-70 cuts per minute with bars having a diameter between 40 and 100 mm (the size range of the most widely used bars). Moreover, the current cutting technique described above leaves small deformations on the cutting surfaces that give the resulting billet a shape that is less perfect than would be desirable commercially. The tool that parts the two portions with its blow in fact induces an initial flexing on the part, which therefore loses the straightness of its generatrices at the cutting section, which is furthermore not fully flat but has a slight undulation, with a rise in the region closest to the beginning of the cut and a hollow in the furthest region, also with some small separations and depositions of metallic material due to plasticizing, especially in the presence of more malleable metals.

Patent application PCT WO 97/00751 discloses a machine for cutting thin bars with a diameter that does not exceed 20 mm. The machine is hydraulic and is actuated by a slide valve. However, such machine is unable to perform the cutting with adiabatic coalescence, is unable to cut thick bars at high speeds, and has a considerable energy consumption.

The aim of the present invention is to provide a new generation of shearing machines having a distinctly higher cutting speed in order to achieve higher productivity.

Within this aim, an object of the invention is to provide substantially perfect cutting surfaces, which can be obtained otherwise only with bladed or band sawing machines, whose productivity is approximately one hundred times lower and which generate waste, in the form of chips, at each cut.

Therefore, according to the invention, a substantial improvement of the quality of the cut surface and currently unthinkable component speeds are sought.

This aim and this and other objects that will become better apparent hereinafter are achieved by a device according to the invention for cutting metallic materials in the form of bars or thick plates, which includes: an impact mass, which is capable of accumulating enough kinetic energy to perform cutting work; a pressurized gas, in order to supply the kinetic energy to the impact mass by virtue of at least one first cylinder-and-piston unit; a liquid for braking an advancement of the impact mass; a valve for releasing the liquid and allowing a rapid advancement of the impact mass; a first cartridge, which can slide within a seat of a frame of the valve, under a thrust of the liquid; an inlet of the liquid into the valve having a direction that is coaxial to the direction of motion of the first cartridge.

The invention further relates to a method for cutting metallic materials in the form of bars or thick plates, the method comprising a relatively faster advancement of the piston under the thrust of the gas and a relatively slower return stroke of the piston under the action of the liquid.

Preferably, the advancement is performed by opening a valve for the passage of the liquid.

Preferably, the opening is performed by virtue of a first advancement of a second cartridge and a second advancement of a first cartridge of the valve.

Preferably, the return stroke is performed by introducing oil in the first cylinder-and-piston unit and by then compressing the gas.

In this manner it has been found that the expected speed increase of the actuation piston of the blanking tool can be obtained from the expansion of a previously compressed gas (generally nitrogen), which occupies the space formed by the rapid movement of the piston, without the limitations that arise from the current need to move the oil through narrow passages in the actuation members. The gas has an expansion and recompression role, with mere top-up of losses, and energy application is entrusted to a hydraulic action of oil, which can be slower because it can occur while the machine is performing the unloading of the cropped segment and the advancement of the bar so as to be arrange correctly for the subsequent shearing operation. To summarize, the very fast descent is entrusted to the expansion of the nitrogen, while the rise of the impact mass is entrusted to a hydraulic action, which can be performed more slowly.

The present invention will become better apparent with reference to the description of two embodiments of the device according to the invention, with reference to the accompanying drawings, which are given only by way of non-limitative example and wherein:
Figure 1 is a schematic view of a first embodiment of the device and of a first step of its operation according to the invention;
Figure 2 is a schematic view of a second step of the operation of a first embodiment of the device according to the invention;
Figure 3 is a schematic view of a third step of the operation of a first embodiment of the device according to the invention;
Figure 4 is a schematic view of a fourth step of the operation of a first embodiment of the device according to the invention;
Figure 5 is a schematic view of a fifth step of the operation of a first embodiment of the device according to the invention;
Figure 6 is an enlarged-scale sectional view of a detail of the device of Figure 1;
Figure 7 is a schematic view of the hydraulic circuit of the device of Figure 1;
Figure 8 is a partially sectional front view of the device of Figure 1;
Figure 9 is a partially sectional side view of the device of Figure 8;
Figure 10 is a chart that plots the speed of the impact mass as a function of time; and
Figure 11 is an enlarged-scale sectional view of a detail of a second embodiment of the device of Figure 1.

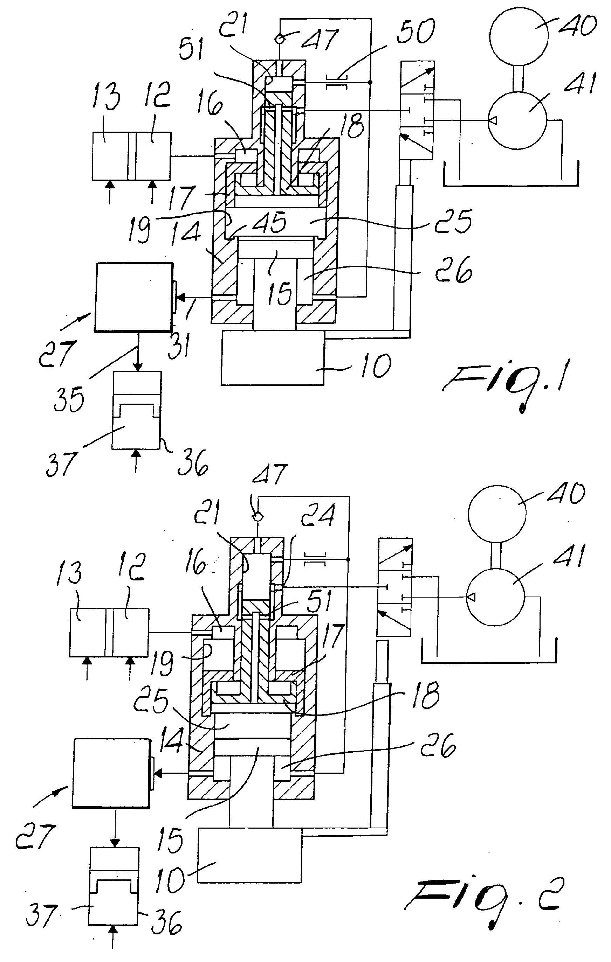

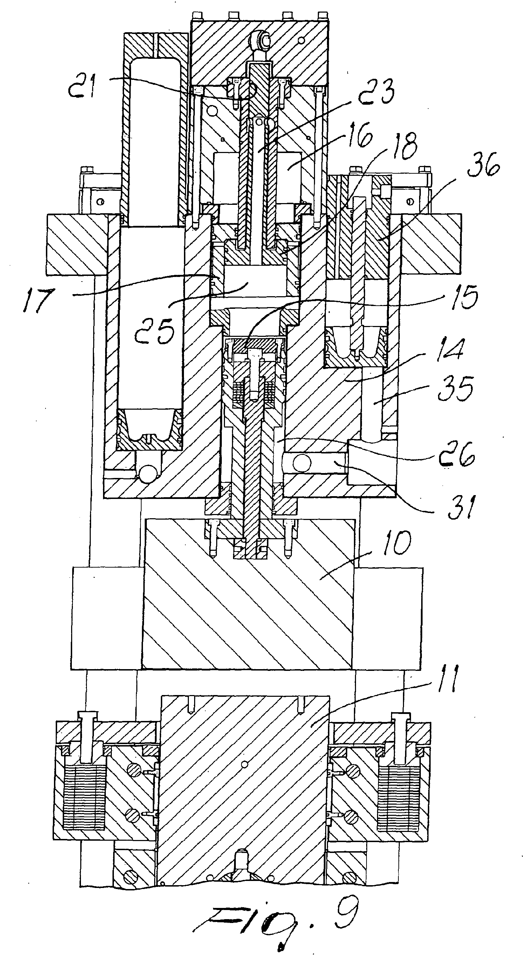

With reference to Figures 1 to 11, the device according to the invention uses an impact mass 10, which engages a ram 11 in order to perform the actual cutting work, with a means that is not shown since it is well-known in the field. A pressurized gas for supplying the kinetic energy to the impact mass 10 is accumulated in an accumulator 12, which is kept pressurized by an adjustable volume of oil that is present in a chamber 13. The volume of oil in the chamber 13 is kept constant during the production of a given part to be cut, but can be changed when the part and the necessary cutting work change. In other words, a pneumatic accumulator 12 allows to transfer the compression energy of the gas to the impact mass 10 and has a volume that can be adjusted preferably by introducing or expelling liquid in/from the accumulator.

The gas, generally nitrogen, feeds a first cylinder-and-piston unit 14-15; in particular, in the illustrated embodiment it feeds a chamber 16. The pressure generated by the gas is transmitted to the first piston 15. In the illustrated embodiment, the pressure is transmitted with the interposition of a second unit, constituted by a cylinder 17 and a piston 18, which is arranged coaxially to the first unit constituted by the cylinder 14 and the piston 15. In particular, the second cylinder-and-piston unit 17-18 includes a second cylinder 17, which can slide on a first seat 19 of the first cylinder 14. The second cylinder-and-piston unit 17-18 includes a second piston 18, which can slide within a second seat 20 of the second cylinder 17 and in a third seat 21 of the first cylinder 14. The second piston is perforated axially, forming a passage 23, and the third seat 21 of the first cylinder 14 has an opening 24 for the passage of liquid through the axial hole 23. The presence of the second cylinder-and-piston unit 17-18 allows a significant energy saving, as will become better apparent from the subsequent description of operation.

Oil is used in order to brake the advancement of the impact mass 10 and perform the return stroke; the oil is contained within a chamber 26 that is arranged under the first piston 15. A valve 27 releases the oil and allows a rapid advancement of the impact mass 10.

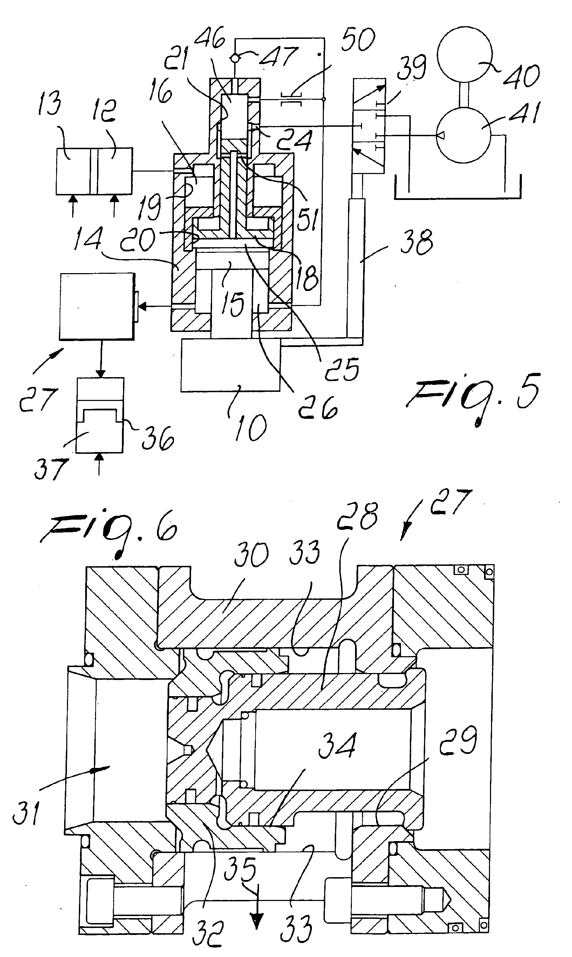

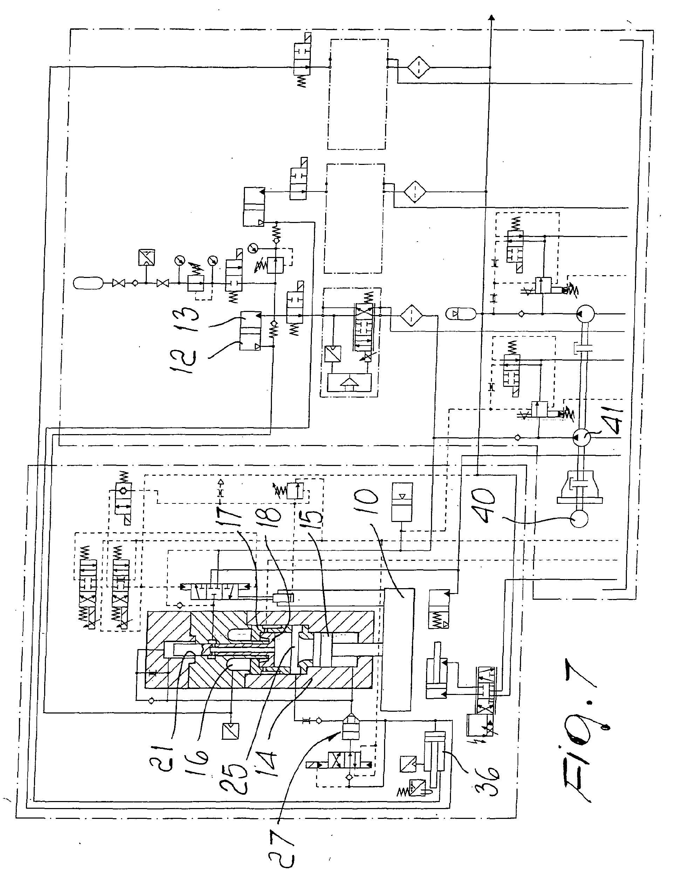

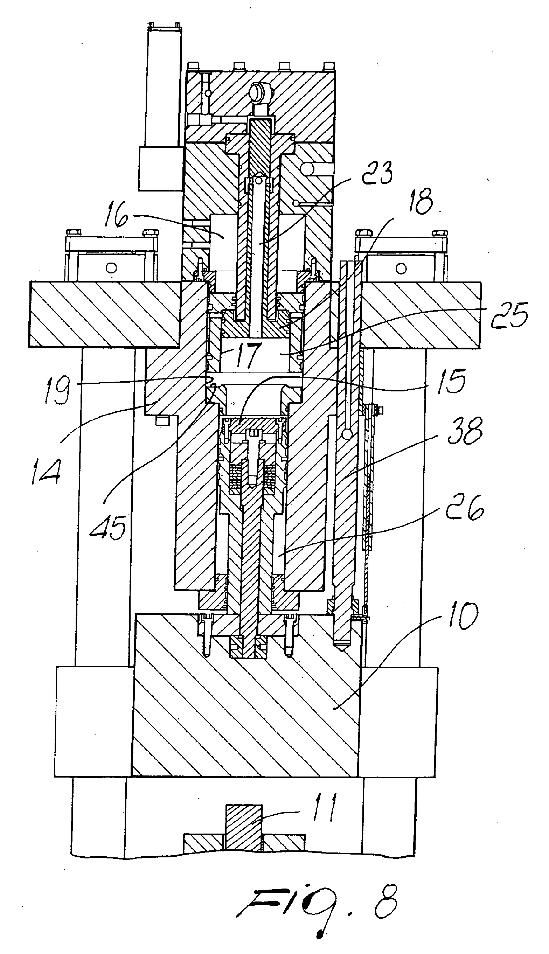

The first embodiment of the invention is described with particular reference to Figure 6; in this embodiment, a first cartridge 32 can slide within a seat 33 of a frame 30 of the valve 27. The first cartridge 32 has a seat 34 inside it in order to accommodate the second cartridge 28. The second cartridge 28 can slide within a seat 29 of a frame 30 of the valve 27, under the thrust of the liquid; an inlet 31 for introducing the liquid in the valve 27 is coaxial to the direction of motion of the first cartridge 32. The cartridge 32 moves coaxially and independently with respect to the second cartridge 28.

In this embodiment, the actuation means for producing faster opening of the first cartridge 32 is formed by the second cartridge 28. In the opening movement, the second cartridge 28 in fact opens first, allowing the free passage of the stream around the seat 29. This passage of the stream in turn allows a very rapid opening of the first cartridge 32.

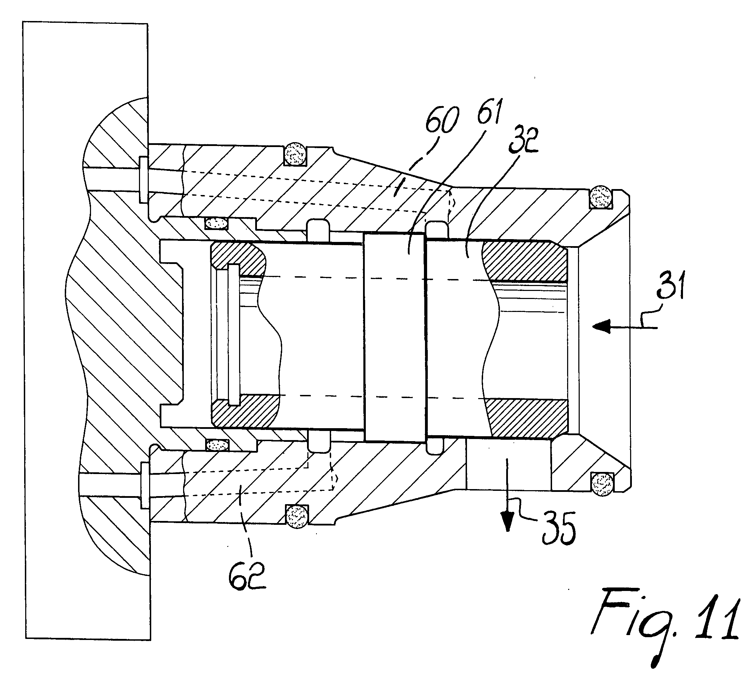

The second embodiment of the invention is described with reference to Figure 11. In this embodiment, the actuation means for producing faster opening of the first cartridge 32 is formed by an opening driving line 60. This line allows to feed oil onto a front side of the cylinder 61 so as to allow very fast opening of the first cartridge 32. The expression "front side" references the side directed toward the fluid inlet 31 of the valve. The closure of the valve is instead driven by the closure driving line 62. Execution according to the second embodiment of the invention is preferred, since it allows to adjust the machine better even with operation at low cutting speeds (around 0.5 m/s) in order to have low energies involved (approximately 1/100th of the maximum energy). This is particularly useful for cutting light alloy bars, which require lower energies.

The valve 27 has a lateral outlet 35 that is connected to an accumulator 36 under pneumatic pressure. In particular, nitrogen is fed into the chamber 37.

A rod 38, connected to the movement of the impact mass 10, actuates mechanically a valve 39, which controls the limit of the return stroke of the impact mass 10.

A motor 40, by virtue of a pump 41, supplies the energy required for the hydraulic operation of the device.

Operation is as follows: the ram that supports the working tool, for example, a bush-fitted blade, provided with a vertical cutting motion, is struck by the impact mass 10, which is considerable in order to also utilize gravitational action and is rigidly connected to the first piston 15, which contains oil both in the upper chamber 25 and in the lower annular region 26.

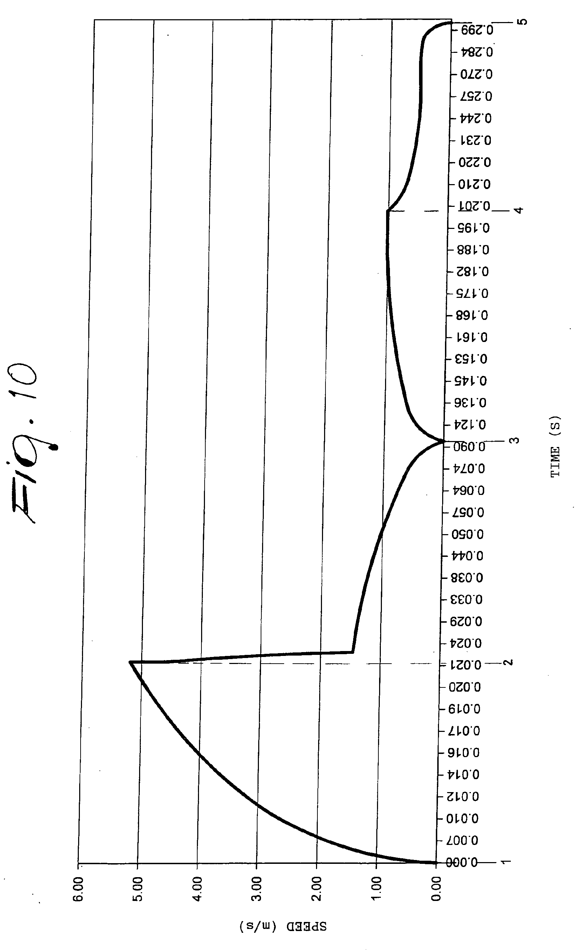

Figure 1 is a view of the second cylinder 17 and of the second piston 18 in the uppermost rest position before motion toward the cutting impulse starts, when both the chamber 25 and the chamber 26 are at the highest pressure, so as to generate enormous mutually contrasting thrusts by virtue of pressures that are on the order of 350 bar in the chamber 26, with energy additions on the part of the hydraulic pump 41. In the chamber 16, the pressure of the gas counterbalances the pressure of the oil. Accordingly, there are enormous thrusts on the first piston 15 both upward and downward, in equilibrium, also taking into account the weight of the mass 10. In Figure 10, this state corresponds to the point 1.

When the valve 27 opens, the pressure in the chamber 26 drops; this causes the downward action produced by the pressure in the chamber 16 to occur without further contrast, and the consequent enormous thrust on the first piston 15, combined with the gravity of the mass 10, can greatly accelerate the cutting mass, making it reach the desired very high cutting speeds. This extremely rapid descent is allowed by the expansion of the nitrogen pocket 16, which can expand freely downward by acting on the second cylinder 17, which entrains the second piston 18 and the volume of oil contained in the chamber 25. The rapid descent of the first piston 15 is also possible by virtue of an equally rapid emptying of the chamber 26 toward the accumulator 36, which is loaded at the rear 37 with nitrogen, which gradually compresses as the oil flows into it from the chamber 26, so as to also perform a damping action in order to prevent the mass 10, with the cutting ram, from arriving at the downward stroke limit with a violent impact that is unacceptable in every respect. The expansion of the compressed nitrogen starts from maximum adjustable pressure of less than 200 bar, which can be adjusted to value of a few tens of bars. The second cylinder 17 descends until it encounters the abutment 45. This is the position shown by Figure 2. With reference to Figure 10, this position is represented by the point 2.

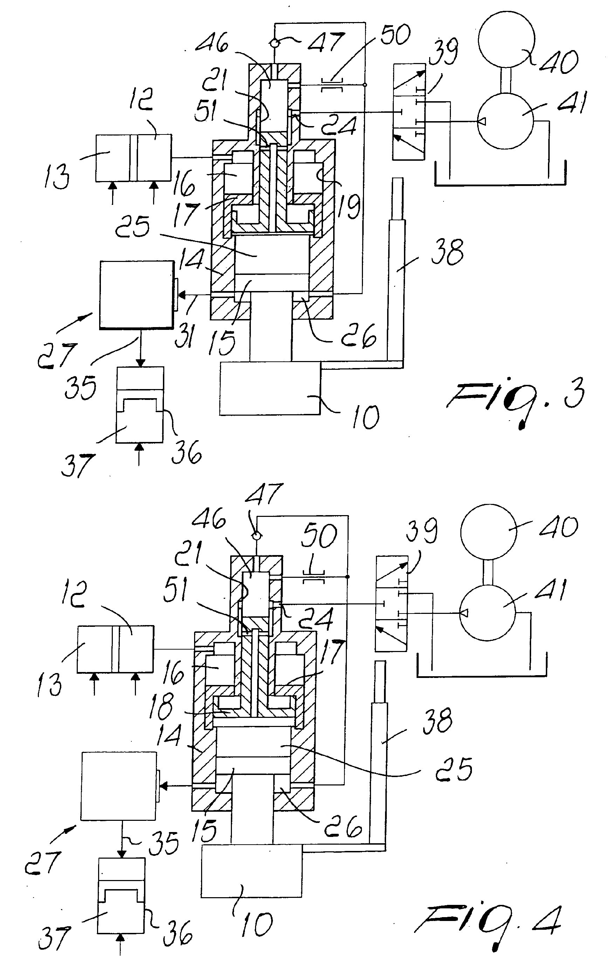

The second piston 18 then stops at the full stroke allowed to the cutting mass, so as to ensure the continuity of the oil supply, which prevents the formation of a vacuum in the chamber 25 in order to continue the descent of the first piston 15. After the second cylinder 17 stops against the abutment 45, the descent of the second piston 18 is ensured by the thrust in the chamber 46 on the part of the oil that arrives from the one-way valve 47, which opens and allows the fluid to arrive from the chamber 26, where the pressure is rising in order to cushion the very rapid active descent of the impact mass 10, until it reaches the end of the stroke. This position is shown in Figure 3. With reference to Figure 10, this position is represented by the reference numeral 3.

The accumulator 36 then becomes a motor by virtue of the compression of the nitrogen contained therein that has occurred; the nitrogen can thus push back out the oil, which returns into the chamber 26 in order to make the first piston 15 rise again. During the first part of its upward motion, the first piston 15 pushes the oil of the chamber 25 so as to push upward the second piston 18, thus recovering, without having to send it to the discharge, the oil that the piston 18 had supplied to the first piston 15 in the second part of the descent, after the halting of the second cylinder 17 against the abutment 45. As it rises, the piston 18 is braked by the oil contained in the chamber 46; the oil is in fact forced to pass through a suitable choke 50, and this causes a necessary slowing of the rise of the first piston 15. Toward the end of the upward stroke of the second piston 18, the port 51 provided in the stem of the second piston 18 faces the port 24, which is formed in the body 14 and is connected to the slider of the valve 39 actuated in the discharge position. This position is shown in Figure 4. With reference to Figure 10, this position is represented by the reference numeral 4.

The oil can then flow out, pushed upward again by the first piston 15, toward the discharge, braking the stroke of the first piston 15 by virtue of the load losses that it undergoes. In the last part of the upward stroke of the first piston 15, the rod 38, rigidly coupled to the impact mass 10 and to the first piston 15, moves mechanically the slider of the valve 39, until it fully chokes the passage to the oil toward the discharge, thus halting the rise of the first piston 15 and of the impact mass 10 rigidly coupled thereto. It should be noted that in this last part of the rise of the impact mass 10, the second cylinder 17, which had allowed the first part of the descent, has remained motionless against the abutment 45, and the amount of oil that has reached the discharge through the valve 39 corresponds to the amount of oil that had been supplied to the first piston 15 by the second cylinder 17. This position is shown by Figure 5. With reference to Figure 10, this position is represented by the reference numeral 5.

At this point, after actuating the closure of the valve 27, the slider of the valve 39 is actuated into the position for feeding the oil, which is pushed at high pressure, passing through the ports 24 and 51 and the hole 23 of the stem of the second piston 18, and can overcome the action of the nitrogen that is present in the chamber 16 and return the second cylinder 17 to the raised position in order to start a new cutting cycle.

This is an inventive technical solution that shows how it is functionally possible to obtain shearing at the very high speed required to achieve the intended quality of the cutting surface.

With respect to the known mechanical systems described above, the present invention therefore allows to achieve the intended aim and object, and in particular:

| Known mechanical systems | Advantages of present invention |
|---|---|
| Heavy and bulky mechanical systems for actuating the cutting ram. | System with interaction of oil and compressed gas, with reduction of masses and bulk. |
| Functional parameters can be changed only with expensive electrical motor power supply systems. | Functional parameters can be changed without requiring specific system complications by simply varying the pressures of the fluid. |
| The mechanical power is difficult to modulate and control with computerized means. | The invention allows a high computerization of the automatic control system. |
| Cutting speeds are limited to 200-300 mm/s. | Cutting speeds up to 5000 mm/s. |
| Productivity of 60-70 cuts/min. | Productivity up to over 100 cuts/min. |
| Cutting surfaces are not perfectly flat, with slight inflection of the body of the billet. | Cutting surfaces are flat and billet body is not deformed significantly. |

The comparison with known hydraulic systems should not be necessary, since the performance of these systems is dramatically lower even than that of mechanical systems. In any case, according to the invention, the increasingly faster motion of the mass 10 does not require the direct supply of oil at a proportionally increasing speed through the narrow ports of the actuation sliders as occurs in conventional oil-using hydraulic systems, because an expanding gas sees to this.

As regards the nitrogen in the accumulator 12, it can be introduced in the accumulator at pressures of only a few tens of bars, entrusting to a hydraulic piston the further compression required to keep the volume 16 loaded, so as to be able to set the required pressure between a few tens of bars and maximum values that are in any case lower than 200 bar, without having to discharge nitrogen into the air in order to lower previous higher pressure values. It is indeed by means of the simple adjustment of the pressure of the nitrogen, which can be obtained by acting hydraulically, as mentioned, that the cutting speed varies, without further complications.

The invention is susceptible of numerous modifications and variations, all of which are within the scope of the appended claims.

## Claims

1. A device for cutting metallic materials in the form of bars or thick plates, comprising: an impact mass, which is capable of accumulating enough kinetic energy to perform cutting work; a pressurized gas, in order to supply said kinetic energy to said impact mass by virtue of at least one first cylinder-and-piston unit; a liquid for braking an advancement of said impact mass; a valve for releasing said liquid and allowing a rapid advancement of said impact mass; a first cartridge, which can slide within a seat of a frame of said valve, under a thrust of said liquid; and an inlet for introducing said liquid into said valve having a direction that is coaxial to the direction of motion of said first cartridge.

2. The device according to claim 1, comprising an actuation means for producing a faster opening of said first cartridge.

3. The device according to claim 2, wherein said actuation means is formed by a second cartridge whose motion is coaxial and independent with respect to said first cartridge.

4. The device according to claim 3, wherein said second cartridge slides within a seat of a frame of said valve.

5. The device according to at least one of the preceding claims, wherein said second cartridge slides within a seat formed in said first cartridge.

6. The device according to claim 2, wherein said actuation means is formed by an opening driving line for feeding liquid onto the front part of said first cartridge.

7. The device according to at least one of the preceding claims, wherein said valve has a lateral outlet that is connected to an accumulator of oil under pneumatic pressure.

8. The device according to at least one of the preceding claims, wherein said first cylinder-and-piston unit comprises a second cylinder-and-piston unit arranged coaxially.

9. The device according to at least one of the preceding claims, wherein said second cylinder-and-piston unit comprises a second cylinder that slides on a first seat of the first cylinder.

10. The device according to at least one of the preceding claims, wherein said second cylinder-and-piston unit comprises a second piston that slides in a second seat of said second cylinder and in a third seat of said first cylinder.

11. The device according to claim 10, wherein said second piston is axially perforated, said seat of said first cylinder having an opening for the passage of liquid through said axial hole.

12. The device according to one or more of the preceding claims, wherein said gas under pressure for supplying said kinetic energy to said impact mass is supplied by a pneumatic accumulator, said accumulator having a volume that is adjustable, preferably by introducing or expelling liquid in/from said accumulator.

13. A method for cutting metallic materials in the form of thick plates or bars, with a device as claimed in claim 1, comprising the steps of: advancing relatively fastly said piston under the thrust of said gas and returning relatively more slowly said piston under the action of said liquid.

14. The method according to claim 13, wherein said advancing step is actuated by opening a valve for the passage of said liquid.

15. The method according to claim 14, wherein said opening is actuated by virtue of a first advancement of a second cartridge and a second advancement of a first cartridge of said valve.

16. The method according to at least one of the preceding claims, wherein said returning step of the piston is performed by introducing oil in said first cylinder-and-piston unit and by then compressing said gas.
